# EUROPÄISCHE PATENTSCHRIFT

(11) **EP 0 893 870 B1**
(45) Veröffentlichungstag und Bekanntmachung des Hinweises auf die Patenterteilung: **07.09.2011**
(21) Anmeldenummer: 98112824.2
(22) Anmeldetag: 10.07.1998
(51) Int. Cl.: H02J 9/00, H04N 5/63

(54) **Netzspannungsversorgungseinrichtung**
Mains power supply apparatus
Dispositif d'alimentation de réseau

(30) Priorität: 26.07.1997 DE 19732299
(43) Veröffentlichungstag der Anmeldung: 27.01.1999
(73) Patentinhaber: Deutsche Telekom AG, 53113 Bonn (DE)
(72) Erfinder: Henkel, Leonhard, 64367 Mühltal (DE)

(56) Entgegenhaltungen:
- WO-A-95/10875
- DE-A- 3 045 715
- DE-A- 19 500 409

## Beschreibung

Die Erfindung betrifft eine Netzspannungsversorgungseinrichtung mit einem an ein Spannungsnetz anschließbaren Netzspannungswandler zur Energieversorgung zumindest eines Verbrauchers, und eine Steuerungseinheit, die einen Stand-by-Betrieb eines Verbrauchers ermöglicht.

Derartige Netzspannungsversorgungseinrichtungen sind bekannt und werden im privaten oder professionellen Bereich zur Energieversorgung von netzbetriebenen Geräten eingesetzt. In großem Maße können diese netzbetriebenen Geräte in einen Stand-by-Modus gesetzt werden, in dem nicht wie im eigentlichen Betriebszustand alle Gerätefunktionen verfügbar sind, sondern gewöhnlich nur wenige, aber relevante Steuerfunktionen genutzt werden können. Häufig beschränken sich die Möglichkeiten lediglich auf die Funktion des Ein- oder Ausschaltens, beispielsweise das manuelle Einschalten eines Fernsehgerätes über eine Fernbedienung. Daneben ist im Stand-by-Betrieb teilweise eine Echtzeituhr für Steueraufgaben der Hauptfunktionen erforderlich, sowie eventuell ein Speicher mit Controller zur Verwaltung, Abarbeitung und Steuerung verschiedener Daten beziehungsweise Funktionen, wie Zustandsanzeige, Infospeicherung (zum Beispiel Sprache im Anrufbeantworter) usw.

Bei Konsumgeräten dient der Stand-by-Betrieb teilweise dem Bedienungskomfort, wie beispielsweise das Ein- und Ausschalten eines Fernsehgeräts. Unter bestimmten Bedingungen ist ein Stand-by-Betrieb jedoch technisch notwendig, beispielsweise bei Videorecordern mit Zeitsteuerung, bei verschiedenen Telekom-Endgeräten, wie Telefaxgeräte, Anrufbeantworter usw., die funktionstechnisch so weit aktiviert sein müssen, daß sie zum Beispiel ankommende Anrufe jederzeit erkennen können.

Eine grobe Betriebszustandsanalyse gebräuchlicher Geräte ergibt eine durchschnittliche Hauptgeräte-Einschaltdauer zwischen 1 % und 10 % der gesamten Betriebszeit einschließlich Wartephasen. Daraus ergibt sich, daß die Geräte überwiegend im Ruhezustand (90 % bis 99 %) verweilen. Der Energiebedarf der netzbetriebenen Geräte ist zwar bei beiden Betriebsarten (Stand-by-Betrieb und Betriebszustand) unterschiedlich (z. B. 5 bis 10 Watt im Stand-by-Betrieb und ca. 50 Watt im Betriebszustand), kann aber auch im Wartezustand nicht vernachlässigt werden, zumal bei vielen Geräten, zum Beispiel mit getrenntem Steckernetzteil, die transformatische Spannungswandlung im Ruhebetrieb die Netzversorgung mit einer nicht zu vernachlässigenden Wirk- und induktiven Blindleistung belastet.

Aus der WO 95/10875 A1 ist eine Stromversorgung von Bereitschaftsschaltungen von elektrischen Geräten bekannt, bei der zwischen dem zu versorgenden elektrischen Gerät und einem Netzspannungswandler zusätzlich eine Energiespeichereinheit parallel geschaltet ist. Diese Energiespeichereinheit übernimmt bestimmungsgemäß im Bereitschaftszustand die Energieversorgung des elektrischen Gerätes; die Versorgungsdauer hängt vom Energieinhalt der Speichereinheit und dem Energiebedarf des Stand-by-Konzeptes ab. Somit ist hier die Spannungsversorgung des elektrischen Gerätes zeitweise unabhängig von dem eigentlichen Spannungsversorgungsnetz.

Aus der DE 195 00 409 A ist ein fernsteuerbares nachrichtentechnisches Gerät bekannt, das mittels einer Steuereinrichtung in unterschiedliche Betriebsarten geschaltet werden kann. Die Steuereinrichtung ist durch eine Fernbedienung aktivierbar, wobei ein stufenweises Abschalten des nachrichtentechnischen Gerätes in einen Stand-by-Betrieb und nachfolgend in einen Aus-Betrieb erfolgen kann.

Aus der DE 3045715A1 ist eine Netzspannungsversorgungseinrichtung bekannt, die einen Stand-by Betrieb eines Verbrauchers ermöglicht. Während des Stand-by Betriebs wird die Steuerungseinrichtung von einer wiederaufladbaren Batterie gespeist. Die Batterie wird nur im gerätaktiven Betrieb aufgeladen.

Die Aufgabe der vorliegenden Erfindung besteht deshalb darin, eine Netzspannungsversorgungseinrichtung vorzusehen, die eine Reduzierung des Energiebedarfs eines netzbetriebenen Verbrauchers im Stand-by-Betrieb ermöglicht.

Diese Aufgabe wird mit einer Netzspannungsversorgungseinrichtung gelöst, die die Merkmale des Anspruchs 1 aufweist. Dadurch, daß dem Netzspannungswandler ein von der Steuerungs - (und Überwachungs -) Einrichtung gesteuertes Schaltelement vorgeschaltet ist, läßt sich der Netzspannungswandler vom Spannungsnetz trennen. Der geringe Energiebedarf der diesbezüglich optimierten Steuerungseinrichtung zur Bereitstellung der im Stand-by-Betrieb notwendigen Funktionen wird über ein Energiespeicherelement erzielt. Damit läßt sich der Energieverbrauch aus dem Versorgungsnetz im Stand-by-Betrieb praktisch vermeiden, da keine Energieverluste im Netzspannungswandler auftreten.

Die Netzspannungsversorgungseinrichtung umfasst eine zentrale Steuerungseinrichtung eine Überwachungseinheit, die für den Verbraucher bestimmte Steuerungsbefehle empfängt und abhängig davon das Schaltelement ansteuert. Mit Hilfe der Überwachungseinheit ist es also möglich, von außen beispielsweise mittels einer Fernbedienung im Stand-by-Betrieb den Steuerungsbefehl "Einschalten" abzusetzen, wobei als Reaktion das Schaltelement angesteuert wird und den Netzspannungswandler mit dem Spannungsnetz verbindet.

Die Überwachungseinheit ist mit einem spannungsausgang des Netzspannungswandlers verbunden, um dessen Ausgangsspannung zu detektieren. Damit ist es möglich, die Verfügbarkeit der Netzversorgung oder zum Beispiel die Funktion des Schaltelements zu überwachen und im Fehlerfall zu reagieren, beispielsweise durch optische und/oder akustische Anzeige und/oder durch erneutes automatisches Ansteuern des Schaltelements.

Die Überwachungseinheit ist mit der Energiespeichereinheit zur Energieversorgung und Detektion dessen Ausgangsspannung verbunden. Damit läßt sich die für den Stand-by-Betrieb notwendige Spannung überwachen und bei Unterschreiten eines bestimmten vorgebbaren Grenzwertes reagieren, beispielsweise mittels einer akustischen und/oder optischen Anzeige. Wird als Energiespeicherelement in vorteilhafter Weise ein wiederaufladbares Energiespeicherelement, beispielsweise ein Akkumulator (im folgenden kurz Akku genannt) eingesetzt, so kann bei Unterschreiten des Grenzwerts ein Ladevorgang gestartet werden.

In einer vorteilhaften Weiterbildung umfaßt die Netzspannungsversorgungseinrichtung weitere manuell betätigbare Schaltelemente, um einzelne Funktionen, beispielsweise das direkte (am Gerät) manuelle Ein- oder Ausschalten des Verbrauchers, das Starten des Ladevorgangs etc., auszulösen.

Die Steuerungseinrichtung umfasst ein über die Überwachungseinheit steuerbares weiteres Schaltelement, das eine Trennung des Verbrauchers vom Netzspannungswandler ermöglicht. Damit läßt sich in vorteilhafter Weise ein Aufladen des Energiespeicherelements über das Netz, das heißt mit aktiviertem ersten Schaltelement, bewerkstelligen, ohne daß der Verbraucher ebenfalls vom Netz versorgt wird.

In einer vorteilhaften Ausführungsform ist das Energiespeicherelement so dimensioniert, daß es neben der Bereitstellung von Energie für die Steuerungseinheit im Stand-by-Betrieb auch den Verbraucher über eine definierte Zeitdauer bei einem Netzspannungsausfall versorgen kann.

In einer weiteren vorteilhaften Ausführungsform erfolgt die Energieversorgung der Steuerungseinrichtung, die in diesem Fall Bestandteil eines Telekomunikations-Gerätes ist, im Ruhebetrieb, soweit möglich und zulässig, aus einer "ferngespeisten" Anschlußleitung der Vermittlungstelle. Vorzugsweise wird zusätzlich eine gepufferte Batterie vorgesehen, die die Funktionsverfügbarkeit der Steuerungseinrichtung erhöht.

In einer weiteren vorteilhaften Ausführungsform wird das bedarfsgesteuerte netzseitige Schaltelement, zum Beispiel in einem Steckernetzteil, von einem verbraucherseitigen Niederspannungsschalter und einer zum Beispiel kleinen Primärbatterie so eingeschaltet, daß nach verfügbarer Niederspannung(en) die Batterie entlastet und das Gerät eingeschaltet bleibt. Damit können zum Beispiel abgesetzte und derzeit auch in der Geräteausschaltphase mit dem Netz verbundene Netzteile, in einfacher, energiesparender Weise ausgeschaltet werden.

Die Erfindung wird nun anhand von Ausführungsbeispielen mit Bezug auf die Zeichnung näher erläutert. Dabei zeigen:
- Figur 1: ein schematisches Blockdiagramm einer Netzspannungsversorgungseinrichtung;
- Figur 2: ein Schaltdiagramm eines ersten Ausfüh- rungsbeispiels;
- Figur 3: ein Schaltdiagramm eines zweiten Ausfüh- rungsbeispiels, und
- Figur 4: ein Schaltdiagramm einer nicht beansprunchten Versorgungseinrichtung.

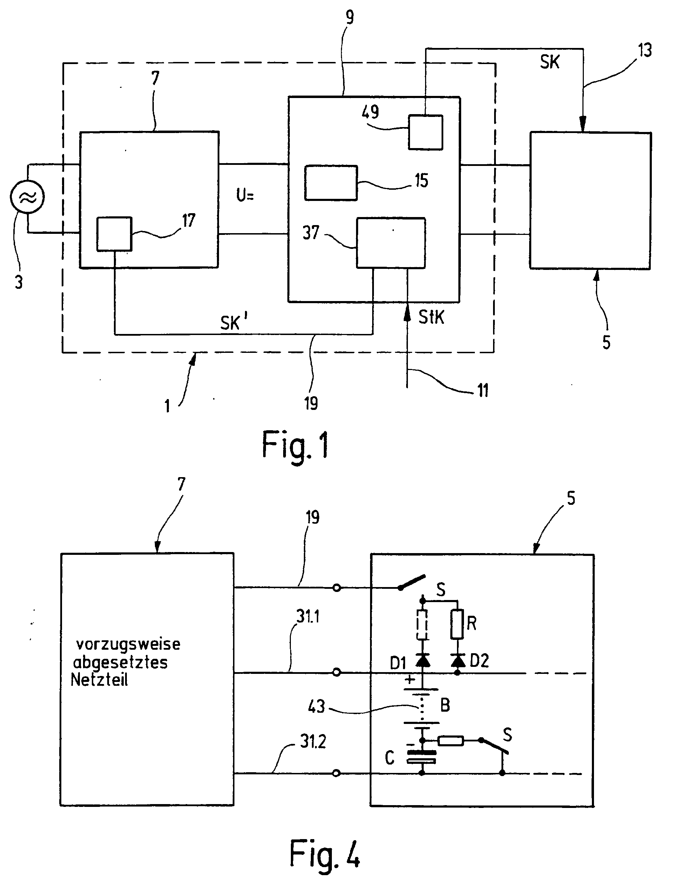

In Figur 1 ist eine gestrichelt umrandete Netzspannungsversorgungseinrichtung 1 dargestellt, die eingangsseitig an ein Spannungsnetz 3, das beispielsweise eine Wechselspannung von 220 V liefert, angeschlossen ist. Ausgangsseitig ist an die Netzspannungsversorgungseinrichtung 1 ein Verbraucher 5, beispielsweise ein Fernsehgerät, angeschlossen. Bei dem Verbraucher 5 handelt es sich um ein Gerät, das im allgemeinen ein- oder auszuschalten ist und in seltenen Fällen einen eigenen Stand-by-Zustand benötigt. Im Betriebszustand lassen sich alle Funktionen des Geräts ausführen; bezogen auf ein Fernsehgerät, heißt das, daß es eingeschaltet ist. Im Stand-by-Zustand sind nur einige Funktionen ausführbar; bei einem Fernsehgerät bestünde diese Funktion beispielsweise im Einschalten.

Die Netzspannungsversorgungseinrichtung 1 umfaßt einen Netzspannungswandler 7, der die ihm zugeführte Netzspannung im Falle eines Schaltwandlers gleichrichtet und auf einen niederen Spannungswert transformiert, oder im klassischen Sinne zunächst transformiert und dann gleichrichtet. Die Anzahl und Höhe der bereitzustellenden Spannungswerte ist abhängig vom zu versorgenden Verbraucher 5.

Dem Netzspannungswandler 7 ist eine Steuerungs- und Überwachungseinrichtung 9 (im folgenden kurz Steuerungseinrichtung genannt) nachgeschaltet, der die transformierte Spannung des Netzwandlers 7 eingangsseitig zugeführt ist und die ausgangsseitig mit dem Verbraucher 5 verbunden ist. Der Steuerungseinrichtung 9 kommt die Aufgabe zu, interne und externe Steuerungsbefehle (Kriterien) StK zu empfangen, was in Figur 1 durch einen Pfeil 11 (für externe StK) angedeutet ist, auszuwerten und als Schaltkriterien SK, beispielsweise an den Verbraucher 5 weiterzuführen, was durch einen Pfeil 13 angedeutet ist. Als Steuerungsbefehle sind beispielsweise interne (programmierte Zeitsteuerung) und externe Befehle "Ein/Aus", Programmwechsel, Lautstärke, etc. zu verstehen.

Die Steuerungseinrichtung 9 umfaßt eine Energiespeichereinheit 15, die einen Betrieb der Steuerungseinrichtung 9 bei fehlender Eingangsspannung U (Stand-by-Phase) gewährleistet.

Der Netzspannungswandler 7 beinhaltet ein steuerbares Schaltelement 17 derart, daß es eine Verbindung zwischen dem Spannungsnetz 3 und zum Beispiel dem Transformator 21 herstellen beziehungsweise lösen kann. Gesteuert wird das Schaltelement 17 von der Steuerungseinrichtung 9 über eine Steuerungsleitung 19. Das Schaltelement 17 ist beispielsweise als Relais ausgeführt, vorzugsweise jedoch als Halbleiterschalter. Mittels eines entsprechenden Steuerungskommandos SK der Steuerungseinrichtung 9 läßt sich also der Netzspannungswandler 7 und damit die Steuerungseinrichtung 9 und der Verbraucher 5 vom Netz 3 trennen. Während dieses Stand-by-Modus wird die Energieversorgung der Steuerungseinrichtung 9 zum Empfang und der Auswertung und Weiterleitung der Steuerungsbefehle StK von der Energiespeichereinheit 15 erbracht. In diesem Modus reagiert die Steuerungseinrichtung 9 im allgemeinen auf eine eingeschränkte Anzahl von Steuerungsbefehlen StK, die zum Beispiel nur ein Umschalten vom Stand-by-Modus in den Betriebsmodus bewirken sollen, so beispielsweise der Steuerungsbefehl "Ein". Beim Empfang eines solchen Steuerungsbefehls wird das Schaltelement 17 über die Leitung 19 aktiviert, so daß es eine Verbindung des Netzspannungswandlers 7 mit dem Spannungsnetz 3 bewirkt.

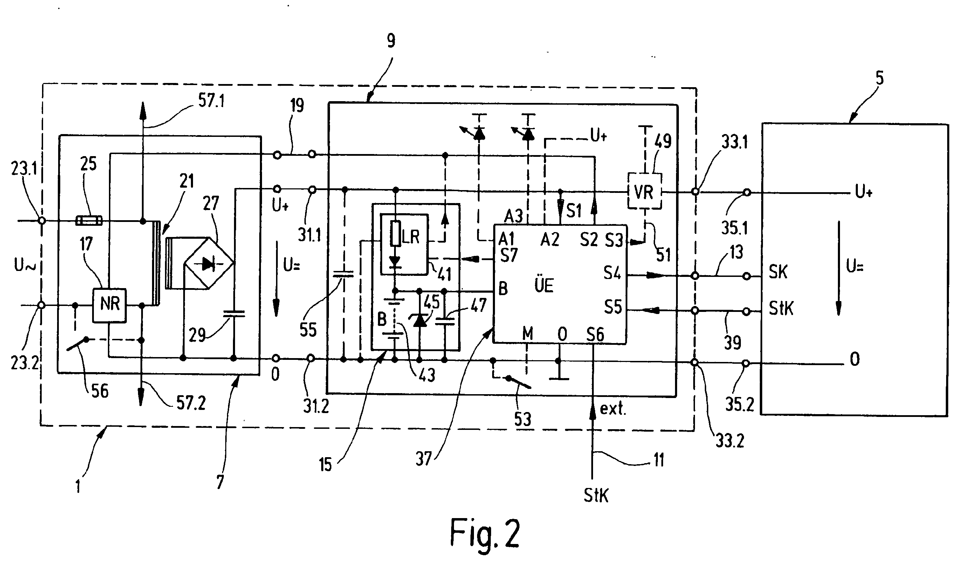

Ein konkretes, einfaches Ausführungsbeispiel -zum Beispiel mit getrenntem Steckernetzteil- wird nun anhand der Figur 2 näher erläutert. Der Netzspannungswandler 7 weist einen Transformator 21 auf, dem eingangsseitig die Netzspannung über zwei Leitungen 23.1 und 23.2 zugeführt ist. Beispielhaft ist in der Leitung 23.1 eine Sicherung 25 vorgesehen.

In einer der Netzleitungen, hier in 23.2 ist das Schaltelement 17 vorgesehen, das einen Stromfluß durch die Primärwicklung des Transformators 21 einschalten oder unterbrechen kann.

Auf der Sekundärseite des Transformators 21 ist ein Gleichrichter 27, beispielsweise ein Brückengleichrichter, vorgesehen, der aus der transformierten Sekundärspannung eine Gleichspannung formt, die zusätzlich durch einen Kondensator 29 geglättet wird. Am Ausgang des Netzspannungswandlers 7 steht somit eine Gleichspannung U₌ zur Verfügung.

Diese Gleichspannung wird der Steuerungseinrichtung 9 zugeführt, die diese über Leitungen 31.1 und 31.2 direkt oder indirekt zu Spannungsausgängen 33.1 und 33.2 und damit über entsprechende Leitungen 35.1 und 35.2 an den Verbraucher 5 weiterführt.

Die Steuerungseinrichtung 9 umfaßt eine Überwachungs und Steuerungseinheit 37, die über eine Vielzahl von Überwachungs- und Steuerungs-Anschlüssen verfügt; die interne Controller-Funktion wird erforderlichenfalls durch interne Steuerungsempfänger (IR, Funk usw.) ergänzt. Der Anschluß S1 der Überwachungseinheit 37 ist mit der Leitung 31.1 (Versorgungsspannung) verbunden, der Anschluß S2 mit der Steuerungsleitung 19, der Anschluß S4 mit der Steuerungsleitung 13, der Anschluß 55 mit einer vom Verbraucher 5 kommenden Leitung 39, die zur Übermittlung von Steuerungsbefehlen StK dient, und der Anschluß 56 mit der Steuerungsleitung 11, die zur Übermittlung von Steuerungsbefehlen von einer externen Quelle, beispielsweise einem Aktivierungs-Kriterium einer TK-Anlage, dient. Hierzu zählen auch geräteinterne und sinnvollerweise von der Energiespeichereinheit 15 versorgte Einheiten, wie zum Beispiel Fernbedienungs-Empfänger, die hier nicht in die Steuerungseinrichtung 9 eingezeichnet wurden. Darüber hinaus ist ein Anschluß 0 der Überwachungseinheit 37 mit der Leitung 31.2 (0-Potential) und ein Anschluß B mit dem Energiespeicherelement 15 verbunden.

Die Energiespeichereinheit 15 umfaßt eine Reihenschaltung aus einem Laderegler 41, der gegebenenfalls über einen Anschluß 57 der Überwachungseinheit 37 gesteuert werden kann und einer wiederaufladbaren Batterie 43, die zwischen die Leitung 31.1 und 31.2 geschaltet ist. Parallel zur Batterie 43 ist symbolisch eine Zenerdiode 45 (zur Spannungsbegrenzung) und ein Kondensator 47 (zur Energiespeicherung bei Batteriewechsel) angeordnet. Die dem Anschluß B der Überwachungseinheit 37 zugeführte Spannung wird am positiven Pol der Batterie 43 abgegriffen, während der negative Pol der Batterie 43 mit der Leitung 31.2, die als Masseleitung dient, verbunden ist. Optional kann der Laderegler 41 auch direkt auf die Steuerungsleitung 19 einwirken.

Die Steuerungseinrichtung 9 umfasst ein weiteres Schaltelement 49, das im ausgangsseitigen Bereich in die Leitung 31.1 geschaltet ist und somit eine Verbindung mit der Leitung 35.1 herstellen und unterbinden kann. Das als Relais oder vorzugsweise als Halbleiterschalter ausgelegte Schaltelement 49 wird über eine Steuerungsleitung 51, die am Anschluß S3 der Überwachungseinheit 37 anliegt, mit den Steuerungsinformationen versorgt.

Der optional beschaltbare Anschluß A2 der Überwachungseinheit 37 ist mit einer -nicht dargestellten- Anzeigeeinrichtung verbunden, die eine optische und/oder akustische Anzeige einer fehlenden Spannung U₌ ermöglicht (Hauptgeräte-Funktionen "Einschalten" usw. können nicht automatisch beziehungsweise fernbedienbar ausgeführt werden).

An einem optional beschaltbaren Anschluß A1 ist eine weitere optische und/oder akustische Anzeigeeinheit, die in Figur 2 nicht dargestellt ist, angeschlossen, um eine Ladeanzeige für die Batterie 43 zu ermöglichen.

An einem Anschluß A3 der Überwachungseinheit ist dann sinnvollerweise für die Anzeige des Stand-by-Modus anstelle bisher üblicher "Daueranzeigen", eine einergiesparende, impulsweise erregte Anzeige, zum Beispiel eine LED, vorgesehen. Einer Impulspause von zum Beispiel 3 bis 10 Sekunden kann ein kurzer "Flash" von zum Beispiel 100 ms folgen.

An einem optional beschaltbaren Ausgang M (manuell) der Überwachungseinheit 37 ist ein Taster/Schalter 53 vorgesehen, der hier eine elektrische Verbindung mit der Leitung 31.2 ermöglicht, um zum Beispiel ein manuelles Einschalten des Verbrauchers 5 zu realisieren (zum Beispiel manueller Einschaltversuch anstelle der beschriebenen, beispielhaften Befehle).

Ebenfalls optional ist der Anschluß S7 mit dem Laderegler 41 verbunden und ein Kondensator 55 vorgesehen, der zwischen den Leitungen 31.1 und 31.2 liegt.

Die in Figur 2 gezeigte Schaltung übt folgende Funktion aus:
Im beginnenden Betriebszustand wird das Schaltelement 17 über die Steuerleitung 19 aktiviert, so daß die Primärwicklung des Transformators 21 mit dem Spannungsnetz 3 (siehe Figur 1) verbunden ist. Je nach Auslegung des Schaltelements 17 ist zur Aktivierung ein ständiger kleiner (zum Beispiel LED-)Erregerstrom über die Leitung 19 zuzuführen oder lediglich jeweils ein Steuerimpuls zum Aktivieren beziehungsweise deaktivieren. Über die Leitungen 31.1 und 31.2 beziehungsweise die Leitung 35.1 und 35.2 wird der beispielhafte Verbraucher 5 (aus Gründen der Vereinfachung nur eine Spannung) in diesem Modus mit der Spannung U₌ versorgt. Bei Bedarf wird in diesem Modus über den Laderegler 41 - vereinfacht als Konstantstrom-Regler dargestellteine Aufladung der Batterie 43 durchgeführt.

Sobald die Überwachungseinheit 37 -im Betriebsmodus über S1 oder B, im Stand-by-Modus über B spannungsversorgt- einen Steuerungsbefehl zum Umschalten in den Stand-by-Modus über die Leitung 39 vom Verbraucher 5 oder über die Leitung 11 von einem externen Gerät, beispielsweise einem externen Fernsteuergerät, beziehungsweise von einer zum Beispiel in der Überwachungseinheit integrieten Fernbedienung erhält, wird das Schaltelement 17 über die Steuerungsleitung 19 deaktiviert, so daß der Stromfluß durch die Primärwicklung des Transformators 21 unterbrochen wird. Dies hat zur Folge, daß die Spannung am Ausgang des Netzspannungswandlers 7 und damit auch die am Verbraucher 5 anliegende Versorgungsspannung auf Null sinkt.

In diesem Stand-by-Modus liefert die Batterie 43 an den Anschluß B der Überwachungseinheit und an einen erforderlichenfalls zu speisenden Fernbedienungsempfang im weitesten Sinne (zum Beispiel auch Anrufauswertung und dergleichen in Kommunikationsgeräten) eine Spannung, die zur Aufrechterhaltung der Funktion der Überwachungseinheit 37 und der genannten eventuell erforderlichen weiteren Funktionseinheit ausreicht. Die Batterie 43 gewährleistet, daß mindestens die Überwachungseinheit 37 weiterhin Steuerungsbefehle StK über die Leitungen 11 und 39 empfangen und auswerten kann, wobei vorzugsweise nur wenige relevante Befehle zur beschriebenen Reaktion führen. Letztlich ist es oft ausreichend, wenn die Überwachungseinheit 37 lediglich auf den Befehl "Einschalten" reagiert. Auch deswegen läßt sich der Energiebedarf der entsprechend optimierten Überwachungseinheit 37 und schließlich der gesamte Geräte-Energiebedarf mittels der nur zeitweise aktivierten Netzspannungsversorgungseinrichtung 1 erheblich verringern.

Möchte der Benutzer oder eine entsprechend berechtigte Einrichtung den Verbraucher einschalten, so wird ein entsprechender Steuerungsbefehl entweder von einem externen Gerät oder über eine von der Stand-by-Batterie 43 mitversorgte Steuerungseinrichtung abgegeben. Dieser führt dazu, daß über die Steuerungsleitung 19 das Schaltelement 17 aktiviert wird, so daß am Ausgang des Netzspannungswandlers 7 die gewünschte Spannung U₌ zur Verfügung steht. Über den Anschluß S1 der Überwachungseinheit 37 wird diese Spannung U₌ überwacht. Sollte trotz Aktivierung des Schaltelements 17 nach ca. 100 ms keine ausreichende Spannung detektiert werden (zum Beispiel Netzversorgungs-Unterbrechung), kann über den Anschluß A2 ein Signal an eine Anzeigeeinrichtung abgegeben werden, die dem Benutzer optisch und/oder akustisch die Fehlfunktion anzeigt. Gleichzeitig wird über die Steuerungsleitung 19 das Element 17 wieder deaktiviert. Je nach Auslegung der Überwachungseinheit 37 entsprechend der praktischen Anforderung kann ein erneutes Aktivieren des Schaltelements 17 automatisch nach Ablauf einer vorgegebenen Zeit wiederholt werden.

Um die Sicherheit der Energieversorgung der Überwachungseinheit 37 auch bei längeren Stand-by-Zyklen zu erhöhen, überwacht diese die am Anschluß B anliegende Spannung der Batterie 43. Sobald die Batteriespannnung einen vorgebbaren Grenzwert unterschreitet, ist es erforderlich, die Batterie 43 nachzuladen beziehungsweise auszutauschen (zum Beispiel bei Verwendung von Primärbatterien). Solange das Schaltelement 17 jedoch deaktiviert ist, fehlt die zum Laden notwendige Energieversorgung. Die Überwachungseinheit 37 aktiviert deshalb über die Steuerungsleitung 19 das Schaltelement 17, so daß eine Spannung am Ausgang des Netzspannungswandlers 7 und damit auf den Leitungen 31.1 und 31.2 anliegt. Sobald die Spannung der Batterie einen vorgebbaren oberen Grenzwert erreicht, wird das Schaltelement 17 wieder deaktiviert. Um dem Benutzer anzuzeigen, daß die Batterie geladen wird, kann die Überwachungseinheit 37 über den Anschluß A1 ein Signal an eine entsprechende Anzeigeeinrichtung anlegen, beispielsweise an ein LCD-Display oder eine LED-Anzeige.

Das in der Leitung 31.1 vorgesehene weitere Schaltelement 49, das beispielsweise als Relais ausgeführt sein kann, vorzugsweise jedoch ein Halbleiterschalter ist, wird während dieser Ladephase von der Überwachungseinheit 37 so gesteuert, daß die elektrische Verbindung zum Anschluß 33.1 und damit zum Verbraucher 5 im Stand-by-Modus unterbrochen wird. Der Verbraucher 5 bleibt somit in dieser Ladephase ausgeschaltet, was geboten oder erwünscht sein kann.

Der Laderegler 41 kann als "intelligenter", batterieschonender oder als einfacher Konstantstromregler ausgeführt sein. Darüber hinaus ist es möglich, daß die beschriebene, von der Überwachungseinheit 37 übernommene Aufgabe der Batterieüberwachung und Steuerung des Ladevorgangs von dem "intelligenten" Laderegler selbst übernommen wird beziehungsweise mittels eines Schaltbefehls von S7 zum Laderegler 41 eine Aufgabenteilung zwischen den Einheiten 37 und 41 realisiert wird.

Es ist anzustreben, daß die Zahl der Ladevorgänge im Stand-by-Modus auf ein Minimum reduziert wird, um einen möglichst geringen Energieverbrauch in diesem Modus zu erreichen. Hierzu sollten Batterie- und Ladekonzept so optimiert werden, daß zumindest in den ersten Jahren des Geräteeinsatzes eine gleichmäßig verteilte minimale Betriebszeit von zum Beispiel 1 % ausreicht, um jeweils ausreichende elektrische Energie für den Stand-by-Betrieb zu speichern, das heißt, während der Gerätebetriebszeit sollte jeweils eine ausreichende Nachladung erfolgen, soweit die verwendete Batterietechnologie (kein Memory-Effekt) dies zuläßt. Die Anwendung batterieschonender Schnelladekonzepte in Verbindung mit kostengünstigen Zellen kleinerer Kapazität läßt allerdings die Bedeutung von Zwischenladezyklen schrumpfen, wenn die Zyklenfestigkeit (Anzahl Lade-Entladezyklen für eine bestimmte Gerätegebrauchsdauer) ausreicht. Mit zunehmendem Batteriealter (das heißt abnehmender Kapazität) können dann zunehmende Zwischenladezyklen akzeptiert werden, bis die Batterie gegebenenfalls ausgetauscht wird. Ist ein Batteriewechsel vorgesehen, so sorgt der Kondensator 47 dafür, daß die Spannungsversorgung der Überwachungseinheit 37 für die Austauschzeit überbrückt wird. Damit lassen sich beispielsweise die Funktion einer Echtzeituhr oder von Datenspeichern auch bei einem Batteriewechsel im Stand-by-Modus erhalten.

In bestimmten Fällen ist, wie bei dem beschriebenen, vergeblichen Einschaltversuch des Verbrauchers 5, ein Ladevorgang im Stand-by-Modus infolge fehlender Netzspannung nicht erfolgreich. Als Reaktion darauf kann kurzzeitig eine akustische und/oder andauernde und stromsparende optische Anzeige erfolgen. Darüber hinaus kann es sinnvoll sein, nach Ablauf einer bestimmten Zeitspanne, zum Beispiel 30 Minuten, mindestens einen erneuten automatischen Ladeversuch zu unternehmen (siehe Einschaltversuch für Verbraucher 5). Spätestens bei Erreichen einer vorgebbaren kritischen Batteriespannung unterhalb der Entladeschluß-Spannung darf zur Batterieschonung und eventuell wegen drohendem Datenverlust kein weiterer Ladeversuch unternommen werden. Eine letzte deutliche akustische und/oder optische Warnung kann auf diesen Zustand hinweisen. Anschließend sind alle, nicht dem Datenerhalt dienenden Stand-by-Funktionen abzuschalten, so daß die Erkennung von Steuerungsbefehlen StK nicht mehr möglich beziehungsweise erforderlich ist. Die Überwachungseinheit 37 reagiert erst dann wieder auf Steuerungsbefehle, wenn die Netzspannung zurückgekehrt ist und zum Beispiel über einen Taster/ Schalter 56, der das Schaltelement 17 überbrückt und manuell den Netzspannungswandler 7 einschaltet, ein kurzer manueller Ladestart beziehungsweise Gerätestart durchgeführt wurde.

Sollte über die Leitung 39 ein Steuerungsbefehl StK, der auf einen fatalen Fehler im Verbraucher 5 hinweist., von der Überwachungseinheit 37 empfangen werden, wird das Schaltelement 49 in der Leitung 31.1 so gesteuert, daß die Spannungsversorgung des Verbrauchers 5 unterbrochen wird. Obgleich im Falle des Verbraucher-Relais (VR) 49 die Spannung am Verbraucher 5 -zum Beispiel dauerhaft bis zur Fehlerbeseitigung- abgeschaltet wurde, läßt sich ein Ladevorgang der Batterie fortsetzen bezeihungsweise später einleiten. Dieser Fehler kann optisch und/oder kurzzeitig akustisch angezeigt werden. Ein manueller Einschaltversuch läßt sich dann beispielsweise mittels des Tasters/Schalters 53 durchführen (zum Beispiel als Reset-Funktion).

Selbstverständlich ist es auch denkbar, bei einem fatalen Fehler, der über die Steuerungsleitung 39 signalisiert wird, das Schaltelement 17 (zum Beispiel wenn das Schaltelement 49 gerätebedingt nicht erforderlich ist) zu deaktivieren und damit den Stromfluß durch die Primärwicklung des Transformators 21 zu unterbrechen. Der Verbraucher 5 ist dann ohne Versorgungsspannung. Bei Feststellen eines Ladebedarfs der Batterie 43 ist es dann möglich, das weitere Schaltelement 49, zu öffnen, während das Schaltelement 17 wieder geschlossen wird. Auch dieser Zustand läßt sich mittels optischer und/oder akustischer Anzeigen dem Benutzer übermitteln.

In der Figur 2 sind noch Leitungen 57.1 und 57.2 zu erkennen, die mit den Netzspannungsleitungen 23.1 bzw. 23.2 verbunden sind. Sie können optional zur gesteuerten Netzversorgung interner oder insbesondere externer Verbraucher vorgesehen sein. Darüber hinaus ist es durchaus denkbar, mehrere Netzspannungswandler 7 oder Teile davon vorzusehen, die über voneinander unabhängige Steuerungsleitungen 19 und Schaltelemente 17 angesteuert werden sowie zum Beispiel über voneinander unabhängige geschaltete Leitungen 57.2 verschiedenartige externe Verbraucher (zum Beispiel HiFi-Anlage mit oder ohne TV-Gerät) zuschalten können.

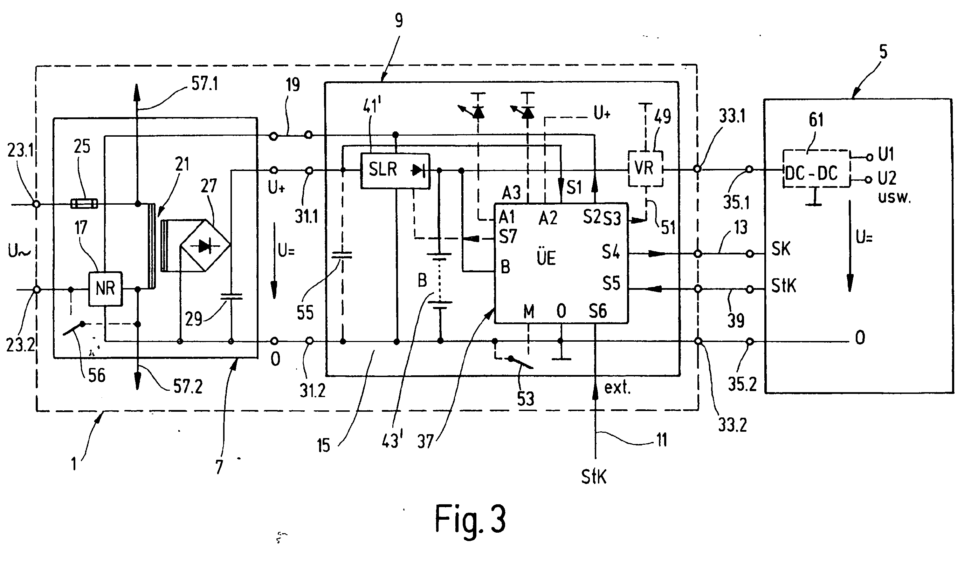

In Figur 3 ist eine weitere Ausführungsform einer Netzspannungsversorgungseinrichtung dargestellt, die im wesentlichen der mit Bezug auf die Figur 2 beschriebenen Ausführungsform entspricht. Auf die nochmalige Beschreibung der mit gleichen Bezugszeichen gekennzeichneten Teile wird deshalb verzichtet.

Die in Figur 3 gezeigte Netzspannungsversorgungseinrichtung weist eine besonders hohe Funktions-Zuverlässigkeit in der Betriebs- und Stand-by-Phase auf. Sie ermöglicht nämlich die vollständige Aufrechterhaltung der Funktion des Verbrauchers auch bei vorübergehendem Netzausfall für eine vorgegebene Zeitspanne. Hierfür ist die Batterie 43' mit entsprechend großer Speicherkapazität vorgesehen, wobei sich die erforderliche Speicherkapazität aus dem maximalen Stromverbrauch des Verbrauchers und der zu überbrückenden Netzausfallzeit berechnen läßt.

Die Figur 3 läßt erkennen, daß ein Schnelladeregler 41' in die Leitung 31.1 geschaltet ist, um eine schnelle und schonende Aufladung der Batterie 43' zu ermöglichen. Der Laderegler 41' kann mittels eines Signals am Ausgang S7 der Überwachungseinheit 37 aktiviert werden, die ebenfalls das Schaltelement 17 erregt. Optional kann aber auch der Laderegler 41' selbst den Batteriezustand überwachen und seinerseits das Schaltelement 17 steuern. Erfolgt die Batterieladung im Stand-by-Modus, bleibt das Schaltelement 49, wie im ersten Ausführungsbeispiel, ausgeschaltet.

Desweiteren ist als optionales Element in Figur 3 ein Gleichspannungswandler 61 dem Schaltelement 49 nachgeschaltet. Der Gleichspannungswandler 61 liefert beispielsweise mehrere erforderliche Gleichspannungen U1, U2 usw.

Beide Ausführungsformen ermöglichen eine deutliche Reduzierung des gesamten Energiebedarfs im Stand-by- und Betriebsmodus, da mittels eines gesteuerten Schaltelements 17 die Netzspannung von der Primärwicklung des Transformators 21 abtrennbar ist. Selbstverständlich steht der Transformator 21 stellvertretend für jegliche Art von Spannungswandler, wobei hier insbesondere auch die elektronischen Spannungswandler zu nennen sind. Mittels dem vorzugsweise als wiederaufladbare Batterie ausgebildeten Energiespeicherelement 43 beziehungsweise 43' läßt sich auch bei abgetrennter Netzspannung die Funktionsfähigkeit der bezüglich Energiebedarf minimierten Überwachungseinheit 37 für alle relevanten Überwachungsaufgaben aufrechterhalten, so daß mindestens Steuerungsbefehle über Leitungen 11 und 39 empfangen und ausgewertet werden können. Selbstverständlich läßt sich die erfindungsgemäße Lehre auch mittels normaler Batterien oder anderer Energiespeicherelemente verwirklichen.

Die in Figur 4 gezeigte einfache Versorgungseinrichtung betrifft Geräte mit meist abgesetztem (Stecker-)Netzteil, die betriebsbedingt keinen Stand-by-Modus benötigen, aber die Ein-/Ausschaltfunktion im niederspannungsseitigen Verbraucherteil vorsehen und das abgesetzte Netzteil am Netz belassen. Diese unnötige Netzverbindung kann mit der beschriebenen Anordnung des Netzspannungswandlers 7 behoben werden, wenn mittels einer zusätzlichen Steuerleitung 19 zwischen abgesetztem Netzteil und Gerät 5 durch Betätigen eines "bereits vorhandenen" Schalters S ein impulsförmiges Schaltkriterium SK' erzeugt wird durch die Reihenschaltung aus zum Beispiel einer Primärbatterie B, einem Kondensator C und zum Beispiel einem Innenwiderstand des Schaltelements 17, und damit die erforderliche Niederspannung an 31.1 bereitstellt und die notwendige andauernde Erregung des Schaltelements 17 mit der Diode D2 und dem Widerstand R aufrechterhält. Beim Ausschalten deaktiviert ein Teil des Schalters S das Element 17 und der zweite Teil des Schalters S entlädt den Kondensator C. Die Anordnung mit dem Kondensator C stellt unter anderem sicher, daß die Batterie B auch bei fehlender Netzspannung und eingeschaltetem Gerät nicht mit einem Dauerstrom belastet wird.

## Patentansprüche

1. Netzspannungsversorgungseinrichtung (1) mit einem an ein Spannungsnetz (3) anschließbaren Netzspannungswandler (7) zur Energieversorgung mindestens eines Verbrauchers (5), einer Steuerungseinrichtung (9), die einen Stand-by-Betrieb des Verbrauchers (5) ermöglicht, einer als wiederaufladbares Energiespeicherelement (43; 43') ausgebildeten Energiespeichereinheit (15), die der Steuerungseinrichtung (9) zugeordnet ist und diese zumindest im Stand-by-Betrieb mit Energie versorgt, einem dem Netzspannungswandler (7) vorgeschalteten Schaltelement (17), das abhängig von einem Schaltkriterium der Steuerungseinrichtung (9) den Netzspannungswandler (7) mit dem Spannungsnetz (3) verbindet, so dass, das vorgeschaltete Schaltelement im gerätaktiven Betrieb geschlossen ist, und mit einer der Steuerungseinrichtung (9) zugeordneten den Ladezustand des Energiespeicherelementes detektierenden Überwachungseinheit (37), die Steuerungsbefehle (StK) für den Verbraucher (5) empfängt und abhängig davon das vorgeschaltete Schaltelement (17) und den Verbraucher (5) ansteuert, wobei, die Steuerungseinrichtung (9) ein weiteres Schaltelement (49) und einen durch die Überwachungseinheit (37) aktivierbaren Laderegler (41) umfaßt, der das Energiespeicherelement abhängig vom Entladezustand im geräteaktiven Betrieb und im Stand-by Betriebauflädt, wobei, im Stand-by Betrieb, wenn der Ladezustand unter einem bestimmten Sollwert ist, die Überwachungseinheit das vorgeschaltete Schaltelement (17) schliesst und das weitere Schaltelement (49) öffnet.

2. Netzspannungsversorgungseinrichtung nach Anspruch 1, **dadurch gekennzeichnet, daß** die Steuerungseinrichtung (9) eine Überwachungseinheit (37) umfaßt, die Steuerungsbefehle (StK) für den Verbraucher (5) empfängt und abhängig davon mittels Schaltkriterium (SK') das Schaltelement (17) und/oder mittels Schaltkriterium (SK) über schaltelement (49) den Verbraucher (5) ansteuert.

3. Netzspannungsversorgungseinrichtung nach Anspruch 2, **dadurch gekennzeichnet, daß** die Überwachungseinheit (37) mit einem Ausgang des Netzspannungswandlers (7) zur Überwachung dessen Ausgangsspannung verbunden ist.

4. Netzspannungsversorgungseinrichtung nach Anspruch 2 oder 3, **dadurch gekennzeichnet, daß** die Überwachungseinheit (37) mit der Energiespeichereinheit (15) zur Energieversorgung mindestens im Stand-by-Betrieb und zur Überwachung dessen Ausgangsspannung verbunden ist.

5. Netzspannungsversorgungseinrichtung nach einem der vorhergehenden Ansprüche, **dadurch gekennzeichnet, daß** die Energiespeichereinheit (15) als Batterie ausgebildet ist.

6. Netzspannungsversorgungseinrichtung nach einem der vorhergehenden Ansprüche, **dadurch gekennzeichnet, daß** die Energieversorgung der Steuerungseinrichtung (9), vorzugsweise bei bestimmten Telekommunikationsgeräten, aus der "fern-gespeisten" Teilnehmer-Anschlußleitung erfolgt.

7. Netzspannungsversorgungseinrichtung nach einem der vorhergehenden Ansprüche, **dadurch gekennzeichnet, daß** der Überwachungseinheit (37) ein Schalter (53) zum Generieren eines Steuerbefehls (Reset) zugeordnet ist.

8. Netzspannungsversorgungseinrichtung nach einem der vorhergehenden Ansprüche, **dadurch gekennzeichnet, daß** der Überwachungseinheit (37) mehrere optische und/oder akustische Anzeigeelemente zur Anzeige von Zustandsinformationen zugeordnet sind.

9. Netzspannungsversorgungseinrichtung nach einem der vorhergehenden Ansprüche, **dadurch gekennzeichnet, daß** im Netzspannungswandler (7) ein Schalter (56) zum manuellen Start eines Ladevorgangs beziehungsweise zum manuellen Einschalten des Verbrauchers (5) vorgesehen ist.

10. Netzspannungsversorgungseinrichtung nach einem der vorhergehenden Ansprüche, **dadurch gekennzeichnet, daß** das weitere Schaltelement (49) von der Überwachungseinheit (37) aktivierbar ist und eine anwendungsbedingte Trennung der Niederspannungsversorgung zum Verbraucher (5) ermöglicht.

11. Netzspannungsversorgungseinrichtung nach einem der vorhergehenden Ansprüche, **dadurch gekennzeichnet, daß** der Laderegler (41) in der Energiespeichereinheit (15) als Schnelladeregler ausgelegt ist und vorzugsweise die Ladung direkt veranlaßt und überwacht.

12. Netzspannungsversorgungseinrichtung nach einem der vorhergehenden Ansprüche, **dadurch gekennzeichnet, daß** das Energiespeicherelement (43; 43') zur Energieversorgung der Steuerungseinrichtung (9) und des Verbrauchers (5) zumindest für eine vorgegebene Zeitdauer während eines Netzspannungsausfalls ausgelegt ist.

13. Netzspannungsversorgungseinrichtung nach einem der vorhergehenden Ansprüche, **dadurch gekennzeichnet, daß** der Netzwandler (7) bei Geräten ohne Stand-by-Betrieb räumlich getrennt vom Verbraucher (5) mit manueller Ein-/Ausschaltmöglichkeit vorgesehen ist, wobei über eine Steuerleitung (19) zwischen Netzspannungswandler und Steuerungseinrichtung im Verbraucher (5) das vorgeschaltete Schaltelement aktivierbar ist.

## Claims

1. Line voltage power supply apparatus (1) having a line voltage converter (7) that can be connected to a power grid (3) to supply energy to at least one load (5), having a control device (9) that permits a standby operation of the load (5), having an energy storage unit (15) designed as a rechargeable energy storage element (43; 43') that is associated with the control device (9) and supplies the latter with energy at least in standby operation, having a switching element (17) preceding the line voltage converter (7) that, as a function of a switching criterion of the control device (9), connects the line voltage converter (7) to the power grid (3) in such a manner that the preceding switching element is closed in active device operation, and having, associated with the control device (9), a monitoring unit (37) that detects the state of charge of the energy storage element and receives control commands (StK) for the load (5) and, as a function thereof, operates the preceding switching element (17) and the load (5), wherein the control device (9) includes an additional switching element (49) and a charging regulator (41) that can be activated by the monitoring unit (37) and that charges the energy storage element in active device operation and in standby operation as a function of the discharge state, wherein, in standby operation, the monitoring unit closes the preceding switching element (17) and opens the additional switching element (49) if the state of charge is below a specific target value.

2. Line voltage power supply apparatus according to claim 1, **characterized in that** the control device (9) comprises a monitoring unit (37) that receives control commands (StK) for the load (5) and, as a function thereof, operates the switching element (17) by means of switching criterion (SK') and/or operates the load (5) through switching element (49) by means of switching criterion (SK').

3. Line voltage power supply apparatus according to claim 2, **characterised in that** the monitoring unit (37) is connected to an output of the line voltage converter (7) for monitoring the output voltage thereof.

4. Line voltage power supply apparatus according to claim 2 or 3, **characterized in that** the monitoring unit (37) is connected to the energy storage unit (15) for supplying energy, at least in standby operation, and for monitoring the output voltage thereof.

5. Line voltage power supply apparatus according to any one of the preceding claims, **characterized in that** the energy storage unit (15) is designed as a battery.

6. Line voltage power supply apparatus according to any one of the preceding claims, **characterized in that** energy is supplied to the control device (9), preferably in certain telecommunications terminal devices, from the "remotely fed" subscriber line.

7. Line voltage power supply apparatus according to any one of the preceding claims, **characterized in that** a switch (53) for generating a control command (reset) is associated with the monitoring unit (37).

8. Line voltage power supply apparatus according to any one of the preceding claims, **characterized in that** multiple optical and/or acoustic display elements for displaying status information are associated with the monitoring unit (37).

9. Line voltage power supply apparatus according to any one of the preceding claims, **characterized in that** a switch (56) for manually starting a charging process or for manually switching on the load (5) is provided in the line voltage converter (7).

10. Line voltage power supply apparatus according to any one of the preceding claims, **characterized in that** the additional switching element (49) can be activated by the monitoring unit (37) and allows an applicationbased disconnection of the low-voltage power supply to the load (5).

11. Line voltage power supply apparatus according to any one of the preceding claims, **characterized in that** the charging regulator (41) in the energy storage unit (15) is configured as a fast charge regulator and by preference directly initiates and monitors the charging.

12. Line voltage power supply apparatus according to any one of the preceding claims, **characterized in that** the energy storage element (43; 43') is configured to supply energy to the control device (9) and to the load (5), at least for a predetermined period of time during a line voltage outage.

13. Line voltage power supply apparatus according to any one of the preceding claims, **characterized in that** the line voltage converter (7) in devices without standby operation is provided with manual on/off capability spatially separated from the load (5), wherein the switched-off switching element can be activated through a control line (19) between the line voltage converter and control device in the load (5).

## Revendications

1. Dispositif d'alimentation en tension de réseau (1) comportant un convertisseur de tension de réseau (7) pouvant être connecté à un réseau d'alimentation (3) et destiné à l'alimentation en énergie d'au moins un consommateur (5), un dispositif de commande (9) permettant un fonctionnement en veille du consommateur (5), une unité d'accumulation d'énergie (15) conçue sous forme d'élément accumulateur d'énergie rechargeable (43 ; 43'), ladite unité d'accumulation d'énergie étant associée au dispositif de commande (9) et alimentant ce dernier en énergie au moins en mode veille, un élément de commutation (17) branché en amont du convertisseur de tension de réseau (7), ledit élément de commutation connectant le convertisseur de tension de réseau (7) au réseau d'alimentation (3) en fonction d'un critère de commutation du dispositif de commande (9) de manière à ce que l'élément de commutation branché en amont soit fermé en mode d'équipement actif, et une unité de surveillance (37) associée au dispositif de commande (9) et détectant l'état de charge de l'élément accumulateur d'énergie, ladite unité de surveillance recevant des instructions de commande (StK) pour le consommateur (5) et, en fonction de ces instructions, activant l'élément de commutation (17) branché en amont ainsi que le consommateur (5), le dispositif de commande (9) comprenant un autre élément de commutation (49) ainsi qu'un régulateur de charge (41) activable par l'unité de surveillance (37), ledit régulateur de charge rechargeant l'élément accumulateur d'énergie en fonction de l'état de décharge en mode d'équipement actif ainsi qu'en mode veille, l'unité de surveillance fermant l'élément de commutation (17) branché en amont et ouvrant l'autre élément de commutation (49) en mode veille, lorsque l'état de charge est inférieur à une valeur de consigne définie.

2. Dispositif d'alimentation en tension de réseau selon la revendication 1, **caractérisé en ce que** le dispositif de commande (9) comprend une unité de surveillance (37) qui reçoit des instructions de commande (StK) pour le consommateur (5) et, en fonction de ces instructions, active l'élément de commutation (17) moyennant le critère de commutation (SK') et/ou le consommateur (5) par l'intermédiaire de l'élément de commutation (49) moyennant le critère de commutation (StK).

3. Dispositif d'alimentation en tension de réseau selon la revendication 2, **caractérisé en ce que** l'unité de surveillance (37) est connectée à une sortie du convertisseur de tension de réseau (7) en vue de la surveillance de sa tension de sortie.

4. Dispositif d'alimentation en tension de réseau selon l'une quelconque des revendications 2 ou 3, **caractérisé en ce que** l'unité de surveillance (37) est connectée à l'unité d'accumulation d'énergie (15) en vue de l'alimentation en énergie au moins en mode veille et en vue de la surveillance de sa tension de sortie.

5. Dispositif d'alimentation en tension de réseau selon l'une quelconque des revendications précédentes, **caractérisé en ce que** l'unité d'accumulation d'énergie (15) est conçue sous forme de batterie.

6. Dispositif d'alimentation en tension de réseau selon l'une quelconque des revendications précédentes, **caractérisé en ce que** l'alimentation en énergie du dispositif de commande (9) est effectuée, de préférence pour certains équipements de télécommunication, à partir de la ligne de raccordement de l'abonné « alimentée à distance ».

7. Dispositif d'alimentation en tension de réseau selon l'une quelconque des revendications précédentes, **caractérisé en ce qu'**un commutateur (53) est associé à l'unité de surveillance (37) en vue de la génération d'une instruction de commande (reset).

8. Dispositif d'alimentation en tension de réseau selon l'une quelconque des revendications précédentes, **caractérisé en ce que** plusieurs indicateurs optiques et/ou acoustiques sont associés à l'unité de surveillance (37) en vue de l'indication d'informations d'état.

9. Dispositif d'alimentation en tension de réseau selon l'une quelconque des revendications précédentes, **caractérisé en ce qu'**un commutateur (56) est prévu dans le convertisseur de tension de réseau (7) en vue du lancement manuel d'une opération de charge ou en vue de la mise en marche manuelle du consommateur (5).

10. Dispositif d'alimentation en tension de réseau selon l'une quelconque des revendications précédentes, **caractérisé en ce que** l'autre élément de commutation (49) est activable par l'unité de surveillance (37) et permet, en fonction de l'utilisation, une déconnexion de l'alimentation en basse tension du consommateur (5).

11. Dispositif d'alimentation en tension de réseau selon l'une quelconque des revendications précédentes, **caractérisé en ce que** le régulateur de charge (41) dans l'unité d'accumulation d'énergie (15) est conçu sous forme de régulateur de charge rapide et ordonne et surveille de préférence directement la charge.

12. Dispositif d'alimentation en tension de réseau selon l'une quelconque des revendications précédentes, **caractérisé en ce que** l'élément accumulateur d'énergie (43 ; 43') est conçu en vue de l'alimentation en énergie du dispositif de commande (9) ainsi que du consommateur (5) au moins pour une durée prédéterminée durant une coupure de la tension du réseau.

13. Dispositif d'alimentation en tension de réseau selon l'une quelconque des revendications précédentes, **caractérisé en ce que,** pour des équipements sans mode veille, le convertisseur de réseau (7) est prévu à part et à distance du consommateur (5) avec possibilité de mise en marche et arrêt manuels, l'élément de commutation branché en amont étant activable par l'intermédiaire d'une ligne pilote (19) entre le convertisseur de tension de réseau et le dispositif de commande dans le consommateur (5).
